(19) **Europäisches Patentamt / European Patent Office / Office européen des brevets**

(11) **EP 4 231 567 A1**

(12) **EUROPEAN PATENT APPLICATION**
published in accordance with Art. 153(4) EPC

(43) Date of publication:
**23.08.2023 Bulletin 2023/34**

(21) Application number: **20961080.7**

(22) Date of filing: **11.11.2020**

(51) International Patent Classification (IPC):
**H04L 5/00** $^{(2006.01)}$ **H04W 72/04** $^{(2023.01)}$

(52) Cooperative Patent Classification (CPC):
**H04L 5/00; H04W 72/04**

(86) International application number:
**PCT/CN2020/128220**

(87) International publication number:
**WO 2022/099523 (19.05.2022 Gazette 2022/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
- LIU, Mengting
  **Shenzhen, Guangdong 518129 (CN)**
- GAO, Xin
  **Shenzhen, Guangdong 518129 (CN)**
- LIU, Jianghua
  **Shenzhen, Guangdong 518129 (CN)**

(74) Representative: **Pfenning, Meinig & Partner mbB Patent- und Rechtsanwälte**
**Theresienhöhe 11a**
**80339 München (DE)**

(54) **SIGNAL SENDING METHOD AND APPARATUS, AND SIGNAL RECEIVING METHOD AND APPARATUS**

(57) A signal sending method, a signal receiving method, and an apparatus are disclosed. The method includes: generating a first signal based on a reference sequence and/or an orthogonal cover code OCC; and sending the first signal on M time-frequency resource elements, where the first signal includes M sub-signals, the M time-frequency resource elements are in a one-to-one correspondence with the M sub-signals, any two of the M time-frequency resource elements do not overlap in frequency domain or in time domain, and M is an integer greater than 1; and the reference sequence is a sequence in a sequence set, and any two sequences in the sequence set are orthogonal to each other; and/or the OCC is an OCC in an OCC set, and any two OCCs in the OCC set are orthogonal to each other.

FIG. 2

## Description

## TECHNICAL FIELD

This application relates to the field of wireless communication technologies, and in particular, to a signal sending method, a signal receiving method, and an apparatus.

## BACKGROUND

In a new radio (new radio, NR) system, a base station may perform positioning or channel measurement by measuring an uplink sounding reference signal (sounding reference signal, SRS) sent by a terminal device. An SRS used for positioning is also referred to as a positioning SRS (positioning SRS, pos-SRS). Currently, it is found through research that when an SRS is used for positioning, positioning precision greatly depends on a bandwidth of the SRS. A higher bandwidth indicates higher positioning precision.

The bandwidth of the SRS is related to a capability of a terminal device. For example, a maximum bandwidth supported by a normal-capability terminal device is 100 MHz, and a maximum bandwidth supported by a reduced-capability terminal device is 20 MHz. Therefore, a problem of how to send a wide bandwidth when a bandwidth of an uplink signal is low needs to be resolved.

## SUMMARY

An objective of implementations of this application is to provide a signal sending method, a signal receiving method, and an apparatus, to resolve a problem of how to send a signal with a wide bandwidth when a bandwidth of an uplink signal is low.

According to a first aspect, this application provides a signal sending method. The method is applicable to a scenario in which a network device positions a terminal device. The method is performed by the terminal device or a module in the terminal device. Herein, an example in which the terminal device executes the method is used for description. The method includes: generating a first signal based on a reference sequence and/or an orthogonal cover code OCC; and sending the first signal on M time-frequency resource elements, where the first signal includes M sub-signals, the M time-frequency resource elements are in a one-to-one correspondence with the M sub-signals, any two of the M time-frequency resource elements do not overlap in frequency domain or in time domain, and M is an integer greater than 1; and the reference sequence is a sequence in a sequence set, and any two sequences in the sequence set are orthogonal to each other; and/or the OCC is an OCC in an OCC set, and any two OCCs in the OCC set are orthogonal to each other.

According to the foregoing method, because first signals generated by different terminal devices based on the reference sequence and/or the orthogonal cover code OCC are orthogonal, when the first signals are transmitted on the M time-frequency resource elements, the network device may distinguish between the first signals sent by the different terminal devices on the M time-frequency resource elements, so that a signal with a high bandwidth can be sent over a narrow bandwidth, thereby improving resource utilization.

At least some signals carried on the M time-frequency resource elements are orthogonal, so that mutual interference between signals sent on the M time-frequency resource elements can be reduced. When the first signal is used for positioning, positioning precision can be improved.

In a possible implementation of the first aspect, the generating a first signal based on a reference sequence includes: generating M sub-signals based on the reference sequence, where the reference sequence includes M sub-sequences, and the M sub-signals are in a one-to-one correspondence with the M sub-sequences.

In a possible implementation of the first aspect, each of the M sub-sequences is intercepted from the reference sequence.

In a possible implementation of the first aspect, the generating a first signal based on a reference sequence and an OCC includes: generating the M sub-signals based on the reference sequence and the OCC, where the OCC includes M elements, and the M elements are in a one-to-one correspondence with the M sub-signals.

In a possible implementation of the first aspect, each of the M sub-signals corresponds to the reference sequence.

In a possible implementation of the first aspect, the M sub-signals are generated by extending the reference sequence by using the OCC.

In a possible implementation of the first aspect, the M sub-signals are generated by intercepting the reference sequence and extending, by using the OCC, a part obtained through interception.

In a possible implementation of the first aspect, the first signal is orthogonal to a second signal carried on N time-frequency resource elements, and frequency domain resources of the M time-frequency resource elements completely or partially overlap frequency domain resources of the N time-frequency resource elements.

In a possible implementation of the first aspect, the second signal corresponds to a sequence other than the reference sequence in the sequence set; and/or the second signal corresponds to an OCC other than the OCC in the OCC set.

In a possible implementation of the first aspect, the first signal is a positioning reference signal.

According to a second aspect, this application provides a signal receiving method. The method is applicable to a scenario in which a network device positions a terminal device. The method is performed by a network device or a module in a network device. Herein, an example in which the network device executes the method is used for description. The method includes: determining M time-frequency resource elements; and obtaining a first signal on the M time-frequency resource elements, where the first signal is generated based on a reference sequence and/or an orthogonal cover code OCC; the first signal includes M sub-signals, the M time-frequency resource elements are in a one-to-one correspondence with the M sub-signals, any two of the M time-frequency resource elements do not overlap in frequency domain or in time domain, and M is an integer greater than 1; and the reference sequence is a sequence in a sequence set, and any two sequences in the sequence set are orthogonal to each other; and/or the OCC is an OCC in an OCC set, and any two OCCs in the OCC set are orthogonal to each other.

According to the foregoing method, because first signals generated by different terminal devices based on the reference sequence and/or the orthogonal cover code OCC are orthogonal, when the first signals are transmitted on the M time-frequency resource elements, the network device may distinguish between the first signals sent by the different terminal devices on the M time-frequency resource elements, so that a signal with a high bandwidth can be sent over a narrow bandwidth, thereby improving resource utilization.

In a possible implementation of the second aspect, the M sub-signals in the first signal are generated based on the reference sequence, the reference sequence includes M sub-sequences, and the M sub-signals are in a one-to-one correspondence with the M sub-sequences.

In a possible implementation of the second aspect, each of the M sub-sequences is intercepted from the reference sequence.

In a possible implementation of the second aspect, the M sub-signals in the first signal are generated based on the reference sequence and the OCC, the OCC includes M elements, and the M elements are in a one-to-one correspondence with the M sub-signals.

In a possible implementation of the second aspect, each of the M sub-signals corresponds to the reference sequence.

In a possible implementation of the second aspect, the M sub-signals are generated by extending the reference sequence by using the OCC.

In a possible implementation of the second aspect, the M sub-signals are generated by intercepting the reference sequence and extending, by using the OCC, a part obtained through interception.

In a possible implementation of the second aspect, the first signal is orthogonal to a second signal carried on N time-frequency resource elements, and frequency domain resources of the M time-frequency resource elements completely or partially overlap frequency domain resources of the N time-frequency resource elements.

In a possible implementation of the second aspect, the second signal corresponds to a sequence other than the reference sequence in the sequence set; and/or the second signal corresponds to an OCC other than the OCC in the OCC set.

In a possible implementation of the second aspect, the first signal is a positioning reference signal.

According to a third aspect, this application further provides a communication apparatus. The communication apparatus has a function of implementing any method provided in the first aspect. The communication apparatus may be implemented by hardware, or may be implemented by hardware executing corresponding software. The hardware or the software includes one or more units or modules corresponding to the foregoing function.

In a possible implementation, the communication apparatus includes a processor. The processor is configured to support the communication apparatus in performing a corresponding function of the terminal device in the foregoing method. The communication apparatus may further include a memory. The memory may be coupled to the processor, and the memory stores program instructions and data that are necessary for the communication apparatus. Optionally, the communication apparatus further includes a communication interface, and the communication interface is configured to support communication between the communication apparatus and a device such as a network device.

In a possible implementation, the communication apparatus includes corresponding functional modules, configured to implement the steps in the foregoing method. The function may be implemented by hardware, or may be implemented by hardware executing corresponding software. The hardware or the software includes one or more modules corresponding to the foregoing function.

In a possible implementation, a structure of the communication apparatus includes a processing unit and a communication unit. These units may perform corresponding functions in the foregoing method examples. For details, refer to the descriptions in the method provided in the first aspect. The details are not described herein again.

According to a fourth aspect, this application further provides a communication apparatus. The communication apparatus has a function of implementing any method provided in the second aspect. The communication apparatus may be implemented by hardware, or may be implemented by hardware executing corresponding software. The hardware or the software includes one or more units or modules corresponding to the foregoing function.

In a possible implementation, the communication apparatus includes a processor. The processor is configured to support the communication apparatus in performing a corresponding function of the network device in the foregoing method. The communication apparatus may further include a memory. The memory may be coupled to the processor, and the memory stores program instructions and data that are necessary for the communication apparatus. Optionally, the communication apparatus further includes a communication interface. The communication interface is configured to support communication between the communication apparatus and a device such as a terminal device.

In a possible implementation, the communication apparatus includes corresponding functional modules, configured to implement the steps in the foregoing method. The function may be implemented by hardware, or may be implemented by hardware executing corresponding software. The hardware or the software includes one or more modules corresponding to the foregoing function.

In a possible implementation, a structure of the communication apparatus includes a processing unit and a communication unit. These units may perform corresponding functions in the foregoing method examples. For details, refer to the descriptions in the method provided in the first aspect. The details are not described herein again.

According to a fifth aspect, a communication apparatus is provided, and includes a processor and a communication interface. The communication interface is configured to: receive a signal from a communication apparatus other than the communication apparatus and transmit the signal to the processor, or send a signal from the processor to a communication apparatus other than the communication apparatus. The processor is configured to implement, by using a logic circuit or executing code instructions, the method provided in the first aspect.

According to a sixth aspect, a communication apparatus is provided, and includes a processor and a communication interface. The communication interface is configured to: receive a signal from a communication apparatus other than the communication apparatus and transmit the signal to the processor, or send a signal from the processor to a communication apparatus other than the communication apparatus. The processor is configured to implement, by using a logic circuit or executing code instructions, the method provided in the second aspect.

According to a seventh aspect, a computer-readable storage medium is provided. The computer-readable storage medium stores a computer program or instructions, and when the computer program or the instructions are executed by a processor, the method provided in the first aspect or the second aspect is implemented.

According to an eighth aspect, a computer program product including instructions is provided. When the instructions are run by a processor, the method provided in the first aspect or the second aspect is implemented.

According to a ninth aspect, a chip system is provided. The chip system includes a processor, and may further include a memory, to implement the method provided in the first aspect or the second aspect. The chip system may include a chip, or may include a chip and another discrete component.

According to a tenth aspect, a communication system is provided. The system includes the apparatus (for example, the terminal device) according to the third aspect and the apparatus (for example, the network device) according to the fourth aspect.

**BRIEF DESCRIPTION OF DRAWINGS**

FIG. 1 is a schematic diagram of a 5G core network-based positioning architecture to which an embodiment of this application is applicable;
FIG. 2 is a schematic flowchart of a signal transmission method according to an embodiment of this application;
FIG. 3(a) and FIG. 3(b) are schematic diagrams of signal frequency hopping transmission according to an embodiment of this application;
FIG. 4 is a schematic diagram of reference sequence division according to an embodiment of this application;
FIG. 5(a) and FIG. 5(b) are schematic diagrams of signal frequency hopping transmission according to an embodiment of this application;
FIG. 6 is a schematic diagram of signal frequency hopping transmission according to an embodiment of this application;
FIG. 7 is a schematic diagram of signal frequency hopping transmission according to an embodiment of this application;
FIG. 8 is a schematic diagram of converting a signal to frequency domain according to an embodiment of this application;
FIG. 9 is a schematic diagram of a positioning procedure according to an embodiment of this application;
FIG. 10 is a schematic diagram of a structure of a communication apparatus according to an embodiment of this application; and
FIG. 11 is a schematic diagram of a structure of a communication apparatus according to an embodiment of this application.

**DESCRIPTION OF EMBODIMENTS**

When an SRS is used for channel measurement, the SRS may be transmitted in a frequency hopping manner, to increase a bandwidth of an SRS sent by a terminal device. When the SRS is used for positioning, if this manner is still used, the terminal device may send SRSs at a plurality of consecutive frequency hopping moments, and a base station may superimpose the SRSs at the plurality of consecutive frequency hopping moments, to implement effect of a "large broadband".

However, in this manner, when the SRS is transmitted in a frequency hopping manner, only SRSs sent by different terminal devices at a same frequency hopping moment can be kept orthogonal, but signals obtained after SRSs sent by different terminal devices at a plurality of consecutive frequency hopping moments are superimposed cannot be kept orthogonal. Positioning precision is reduced if the signals obtained after the SRSs sent by the different terminal devices at the plurality of consecutive frequency hopping moments are superimposed are not orthogonal.

Therefore, this application provides a technical solution for sending and receiving a signal. The technical solution may be applied to SRS transmission. Further, the technical solution may be applied to positioning performed by using the SRS. The following further describes in detail embodiments of this application with reference to the accompanying drawings.

The technical solutions in embodiments of this application may be applied to various communication systems, for example, an NR system and a long term evolution (long term evolution, LTE) system. This is not limited herein.

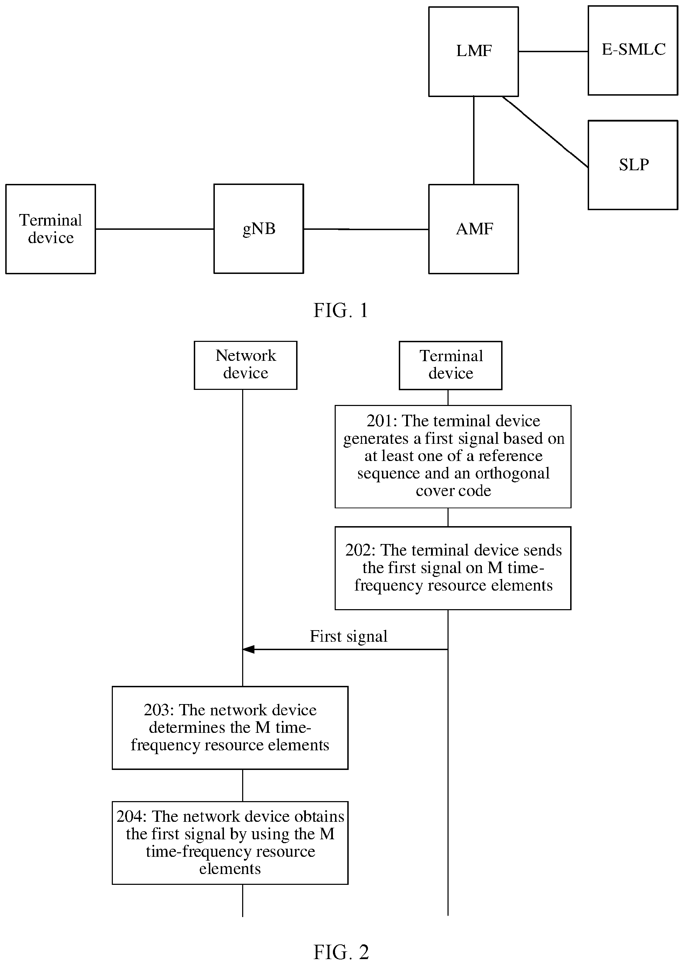

FIG. 1 is a schematic diagram of a 5G core network-based positioning architecture to which an embodiment of this application is applicable. In the network shown in FIG. 1, functions of functional entities may be as follows:

Terminal device: The terminal device may send a reference signal, for example, a pos-SRS, so that a device such as a next generation NodeB (next generation NodeB, gNB) on a network side positions the terminal device based on the pos-SRS.

gNB: The gNB may measure a reference signal from a terminal device, to obtain measurement information, and transfer the measurement information to a location management function (location management function, LMF) network element. The gNB may further provide another function, for example, provide a wireless connection for the terminal device.

LMF network element: The LMF network element may be responsible for supporting different types of location services related to a target terminal device, including positioning the terminal device and transferring assistance data to the terminal device. A control plane and a user plane of the LMF network element are respectively an enhanced serving mobile location center (enhanced serving mobile location center, E-SMLC) network element and a secure user plane location platform (secure user plane location platform, SLP) network element.

AMF network element: The AMF network element may receive a location service request related to a terminal device, or the AMF network element may perform a location service, and forward the location service request to an LMF. After obtaining location information returned by the terminal device, the AMF network element returns the related location information to a location service (location service, LCS) entity.

In embodiments of this application, the terminal device may be a device that has a wireless transceiver function or a chip that can be disposed in any device, or may be referred to as user equipment (user equipment, UE), an access terminal, a subscriber unit, a subscriber station, a mobile station, a mobile console, a mobile device, a user terminal, a wireless communication device, or a user apparatus. The terminal device in embodiments of this application may be a mobile phone (mobile phone), a tablet computer (Pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), or the like.

The terminal device may be a reduced-capability (Reduced Capability, REDCAP) terminal device, or may be a legacy-capability, normal-capability, or high-capability terminal device, or may be referred to as a legacy (legacy) terminal device or a normal (normal) terminal device. The REDCAP terminal device and the legacy terminal device are different in terms of at least a bandwidth capability. For example, a maximum bandwidth supported by the REDCAP terminal device is low, for example, 50 MHz, 40 MHz, 20 MHz, 15 MHz, 10 MHz, or 5 MHz, and a maximum bandwidth supported by the legacy terminal device is high, for example, 100 MHz.

Network device: The network device may be a gNB in an NR system, an evolved NodeB (evolved NodeB, eNB) in an LTE system, or the like. When the network device is the gNB, the network device may include a central unit (central unit, CU) and a distributed unit (distributed unit, DU).

It should be noted that a network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of new service scenarios, the technical solutions provided in embodiments of this application are also applicable to similar technical problems.

In embodiments of this application, interaction between the terminal device and the network device is used as an example for description. The method provided in embodiments of this application may be further applied to interaction between other entities, for example, interaction between a chip or a module in the terminal device and a chip or a module in the network device. If a chip or a module executes the method, reference may be made to the descriptions in embodiments of this application. Details are not described herein.

With reference to the foregoing descriptions, FIG. 2 is a schematic flowchart of a signal transmission method according to an embodiment of this application. Refer to FIG. 2. The method includes the following steps.

Step 201: A terminal device generates a first signal based on at least one of a reference sequence and an orthogonal cover code.

In this embodiment of this application, the reference sequence may be a sequence in a sequence set, and any two sequences in the sequence set are orthogonal to each other. The orthogonal cover code (orthogonal cover code, OCC) may be an OCC in an OCC set, and any two OCCs in the OCC set are orthogonal to each other.

Step 202: The terminal device sends the first signal on M time-frequency resource elements.

The first signal includes M sub-signals, and M is an integer greater than 1. The first signal may be used for positioning. For example, the first signal may be a positioning reference signal, and the positioning reference signal includes but is not limited to a pos-SRS.

The M time-frequency resource elements are in a one-to-one correspondence with the M sub-signals included in the first signal, that is, one of the M time-frequency resource elements is used to carry one of the M sub-signals. In this case, an $i^{th}$ sub-signal in the M sub-signals is carried on an $i^{th}$ time-frequency resource element in the M time-frequency resource elements, where i=1, 2, ..., and M.

It should be noted that any two of the M time-frequency resource elements do not overlap in frequency domain or in time domain. In other words, the M sub-signals are transmitted on the M time-frequency resource elements in a frequency hopping manner.

In this embodiment of this application, one time-frequency resource element may occupy one or more orthogonal frequency division multiplexing (orthogonal frequency division multiplexing, OFDM) symbols in time domain, and may occupy one or more physical resource blocks (physical resource block, PRB) in frequency domain.

In this embodiment of this application, the M time-frequency resource elements may correspond to M bandwidth units in frequency domain, and one time-frequency resource element corresponds to one bandwidth unit. The bandwidth unit may include at least one subcarrier or include at least one bandwidth part (bandwidth part, BWP). Alternatively, the bandwidth unit may be a preset fixed bandwidth. For example, the bandwidth unit is a 20 MHz bandwidth.

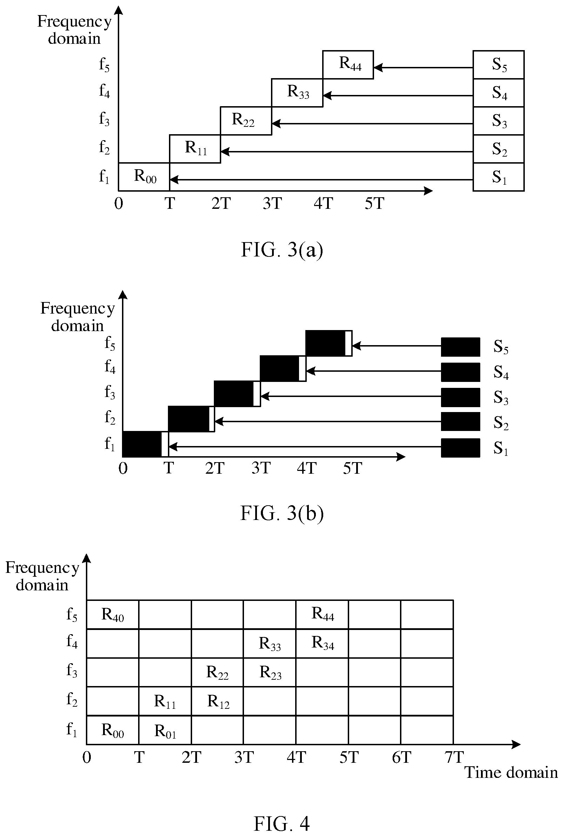

For example, as shown in FIG. 3(a), it is assumed that M=5. In this case, five time-frequency resource elements are respectively $R_{00}$, $R_{11}$, $R_{22}$, $R_{33}$, and $R_{44}$, a frequency corresponding to an $i^{th}$ time-frequency resource element is $f_i(i = 1, 2, \cdots, 5)$, and five sub-signals included in a first signal are respectively $S_1$ to $S_5$. $S_1$ is carried in the time-frequency resource element $R_{00}$, $S_2$ is carried in the time-frequency resource element $R_{11}$, $S_3$ is carried in the time-frequency resource element $R_{22}$, $S_4$ is carried in the time-frequency resource element $R_{33}$,

and $S_5$ is carried in the time-frequency resource element $R_{44}$.

It should be noted that, radio frequency retuning may further need to be performed when the terminal device performs frequency hopping transmission between different time-frequency resource elements. For example, when the terminal device is switched from the time-frequency resource element $R_{11}$ to the time-frequency resource element $R_{22}$, a radio frequency transmit channel of the terminal device also needs to be adapted from a frequency of the time-frequency resource element $R_{11}$ to a frequency of the time-frequency resource element $R_{22}$. A specific time is required to readjust one frequency adapted to the radio frequency transmit channel of the terminal device to another frequency, and the time may be denoted as a radio frequency readjustment time or a radio frequency retuning time. Therefore, last several OFDM symbols in the time-frequency resource element are not used to transmit any signal, and are used to perform radio frequency retuning on the radio frequency transmit channel of the terminal device.

To be specific, a sub-signal carried in one time-frequency resource element may occupy only a part in time domain. For example, the time-frequency resource element includes 14 OFDM symbols, the sub-signal occupies 10 consecutive OFDM symbols, some of other OFDM symbols may be used to transmit other information, and the other part is used to perform radio frequency retuning.

For example, with reference to FIG. 3(a), as shown in FIG. 3(b), the five sub-signals $S_1$ to $S_5$ included in the first signal respectively occupy some time domain resources and some frequency domain resources on corresponding time-frequency resource elements.

In addition, any two of M sub-signals may occupy a same quantity of OFDM symbols in time domain, or may occupy different quantities of OFDM symbols in time domain.

In this embodiment of this application, there may be another signal, for example, a second signal, in a frequency domain resource occupied by the first signal in frequency domain. The first signal may be orthogonal to the second signal. A frequency domain resource occupied by the first signal in frequency domain may completely or partially overlap a frequency domain resource occupied by the second signal in frequency domain. It should be noted that, similar to the first signal, the second signal may also include M sub-signals.

The second signal corresponds to a sequence other than a reference sequence in a sequence set, and the second signal corresponds to an OCC other than an OCC in an OCC set.

For example, the second signal may be carried on N time-frequency resource elements, and frequency domain resources of the M time-frequency resource elements completely or partially overlap frequency domain resources of the N time-frequency resource elements, where N is an integer greater than 0, and a value of N may be equal to a value of M.

For example, when N=M=5, as shown in FIG. 4, five sub-signals included in a first signal are transmitted through frequency hopping respectively on time-frequency resource elements $R_{00}$, $R_{11}$, $R_{22}$, $R_{33}$, and $R_{44}$, and five sub-signals included in a second signal are transmitted through frequency hopping respectively on time-frequency resource elements $R_{40}$, $R_{01}$, $R_{12}$, $R_{23}$, and $R_{34}$. It can be learned from FIG. 4 that a frequency domain resource occupied by the first signal in frequency domain completely overlaps a frequency domain resource occupied by the second signal in frequency domain. It should be noted that the first signal and the second signal may occupy a same time-frequency resource element. In other words, the five sub-signals included in the second signal may be transmitted through frequency hopping respectively on the time-frequency resource elements $R_{00}$, $R_{11}$, $R_{22}$, $R_{33}$, and $R_{44}$.

Optionally, when a frequency domain resource occupied by the first signal in frequency domain partially overlaps a frequency domain resource occupied by the second signal in frequency domain, a bandwidth of an overlapped frequency domain resource is greater than or equal to a threshold. A value of the threshold may be determined based on an actual situation. This is not limited in this application.

For example, with reference to FIG. 4, when a bandwidth of one time-frequency resource element is 20 MHz, and N=M=4, four sub-signals included in the first signal are transmitted through frequency hopping respectively on the time-frequency resource elements $R_{00}$, $R_{11}$, $R_{22}$, and $R_{33}$, and four sub-signals included in the second signal are transmitted through frequency hopping respectively on the time-frequency resource elements $R_{12}$, $R_{23}$, $R_{34}$, and $R_{40}$. In this case, assuming that the threshold is 40 MHz, the first signal and the second signal need to be orthogonal; and assuming that the threshold is 80 MHz, the first signal and the second signal may not be orthogonal.

It should be noted that the first signal and the second signal may be generated and sent by different terminal devices. For clarity, when a relationship between the first signal and the second signal is described, a terminal device that generates the first signal is referred to as a first terminal device, and a sub-signal included in the first signal is referred to as a first sub-signal. Correspondingly, a terminal device that generates the second signal is referred to as a second terminal device, and a sub-signal included in the second signal is referred to as a second sub-signal. Optionally, an $i^{th}$ first sub-signal carried in an $i^{th}$ time-frequency resource element may be orthogonal to an $i^{th}$ second sub-signal carried in the $i^{th}$ time-frequency resource element. That is, a first sub-signal carried on each time-frequency resource element is orthogonal to a second sub-signal carried on the time-frequency resource element, and a first signal including M first sub-signals carried on the M time-frequency resource elements is also orthogonal to a second signal including M second sub-signals carried on the M time-frequency resource elements.

In addition, in addition to the first signal, frequency domain resources corresponding to the M time-frequency resource elements may further carry more signals. In addition to the second signal, the first signal may be further orthogonal to other signals carried on frequency domain resources corresponding to the M time-frequency resource elements. For example, any two of the plurality of signals carried on the frequency domain resources corresponding to the M time-frequency resource elements may be configured to be orthogonal. The plurality of signals may be generated and sent by different terminal devices, and the terminal devices that generate and send the plurality of signals may access a same network device, that is, the network device simultaneously provides wireless connections for the terminal devices.

Step 203: The network device determines the M time-frequency resource elements.

How the network device specifically determines the M time-frequency resource elements is not limited in this application. Details are not described herein.

Step 204: The network device obtains the first signal on the M time-frequency resource elements.

According to the foregoing method, because at least some signals carried on the M time-frequency resource elements are orthogonal to each other, mutual interference between signals sent on the M time-frequency resource elements can be reduced. When the first signal is used for positioning, positioning precision can be improved.

In this embodiment of this application, the first signal may be generated in a plurality of manners. Details are described below.

**Embodiment 1**

In Embodiment 1, the first signal may be generated based on a reference sequence. A bandwidth corresponding to a length of the reference sequence is greater than or equal to a sum of bandwidths of M time-frequency resource elements; or a bandwidth corresponding to a length of the reference sequence is greater than or equal to a bandwidth of the first signal.

A specific manner of generating the reference sequence is not limited in this embodiment of this application. In a possible implementation, the reference sequence may be generated based on a ZC (Zadoff-Chu) sequence.

In Embodiment 1, the terminal device may generate M sub-sequences based on the reference sequence, and then respectively generate M sub-signals based on the M sub-sequences, that is, may generate one of the M sub-signals based on one of the M sub-sequences. The M sub-sequences may be generated together, or may be separately generated. For example, the terminal device may generate the M sub-sequences when or before a first sub-signal in the M sub-signals needs to be sent, and then generate the sub-signals based on the corresponding sub-sequences when the sub-signal needs to be sent. Alternatively, the terminal device may generate the corresponding sub-sequences based on the reference sequence when a sub-signal needs to be sent, to generate the corresponding sub-signals. Alternatively, the terminal device may directly generate the M sub-signals based on the reference sequence, and some reference sequences used in a process of generating a single sub-signal are considered as sub-sequences.

It should be noted that the sequence may be a bit sequence of a specific length. The terminal device may perform operations such as coding and modulation on the sequence, to obtain a corresponding signal.

With reference to the foregoing description, in Embodiment 1, the first signal may be generated in at least two implementations.

In an implementation 1, the reference sequence is a sequence in a sequence set, the sequence set may include one of a plurality of sequences, and any two of the plurality of sequences are orthogonal to each other. The terminal device may select one sequence from the plurality of sequences as the reference sequence. How the terminal device specifically determines the reference sequence from the plurality of sequences is not limited in this embodiment of this application. For example, the reference sequence may be indicated by the network device to the terminal device by using signaling. In same M time-frequency resource elements, the network device may configure mutually orthogonal reference sequences for different terminal devices.

It should be noted that the sequence set may be configured by the network device, or may be determined in another manner. This is not limited in this embodiment of this application.

In the implementation 1, an $i^{th}$ sub-signal in the M sub-signals included in the first signal may be generated based on an $i^{th}$ sub-sequence in the M sub-sequences, where i=1, 2, ..., and M. Any one of the M sub-sequences is a part of the reference sequence, that is, any one of the M sub-sequences may be intercepted from the reference sequence.

Optionally, any two of the M sub-sequences are non-overlapping sequences intercepted from the reference sequence.

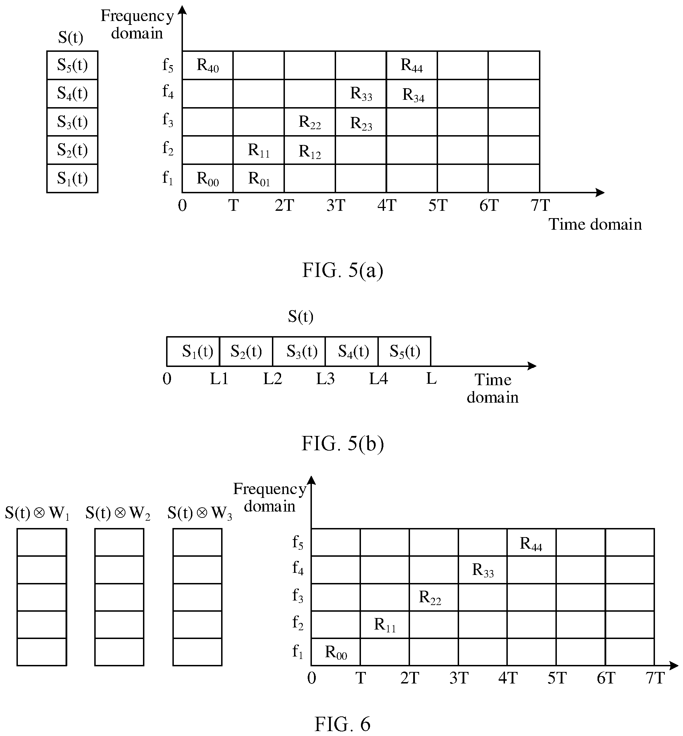

For example, M=5. As shown in FIG. 5(a), it is assumed that a bandwidth corresponding to a length of a reference sequence S(t) is 100 MHz, five non-overlapping sub-sequences are intercepted from the reference sequence, a bandwidth corresponding to a length of each sub-sequence is 20 MHz, and the five sub-sequences are respectively $S_1(t)$ to $S_5(t)$. From a perspective of frequency domain, bandwidths corresponding to lengths of the five sub-sequences are equal to the bandwidth corresponding to the length of the reference sequence S(t). As shown in FIG. 5(b), from a perspective of time domain, the sub-sequence $S_1(t)$ may be a sequence whose length

is 0 to $L_1$ in the reference sequence, the sub-sequence $S_2(t)$ may be a sequence whose length is $L_1+1$ to $L_2$ in the reference sequence, the sub-sequence $S_3(t)$ may be a sequence whose length is $L_2+1$ to $L_3$ in the reference sequence, the sub-sequence $S_4(t)$ may be a sequence whose length is $L_3+1$ to $L_4$ in the reference sequence, and the sub-sequence $S_5(t)$ may be a sequence whose length is $L_4+1$ to L in the reference sequence.

The terminal device may send, in a corresponding time-frequency resource element, a sub-signal corresponding to the sub-sequence $S_1(t)$. Specifically, in FIG. 5(a), five sub-signals corresponding to the sub-sequences $S_1(t)$ to $S_5(t)$ may be sequentially transmitted through frequency hopping on time-frequency resource elements $R_{00}$, $R_{11}$, $R_{22}$, $R_{33}$, and $R_{44}$. It should be noted that, it is assumed that a sub-signal corresponding to an $i^{th}$ (i=1, 2, ..., and 5) sub-sequence is carried on an $i^{th}$ time-frequency resource element in the M time-frequency resource elements, and a bandwidth $W_i$ corresponding to a length of the $i^{th}$ sub-sequence is less than or equal to a bandwidth of the $i^{th}$ time-frequency resource element.

It is assumed that a first signal sent by a terminal device 1 includes five sub-signals corresponding to sub-sequences $S_1(t)$ to Ss(t), and a second signal sent by a terminal device 2 includes five sub-signals corresponding to sub-sequences $S_1(t)'$ to $S_5(t)'$. The five sub-signals corresponding to the sub-sequences $S_1(t)'$ to $S_5(t)'$ may be transmitted through frequency hopping on time-frequency resource elements $R_{00}$, $R_{11}$, $R_{22}$, $R_{33}$, and $R_{44}$, or may be transmitted through frequency hopping on time-frequency resource elements $R_{40}$, $R_{01}$, $R_{12}$, $R_{23}$, and $R_{34}$.

When the five sub-signals corresponding to the sub-sequences $S_1(t)'$ to $S_5(t)'$ are transmitted through frequency hopping by using the time-frequency resource elements $R_{00}$, $R_{11}$, $R_{22}$, $R_{33}$, and $R_{44}$, although the first signal and the second signal occupy a same frequency domain resource, because the first signal and the second signal are orthogonal to each other, the network device may also distinguish between the first signal and the second signal. Correspondingly, when the five sub-signals corresponding to the sub-sequences $S_1(t)'$ to $S_5(t)'$ are transmitted through frequency hopping by using the time-frequency resource elements $R_{40}$, $R_{01}$, $R_{12}$, $R_{23}$, and $R_{34}$, although the first signal and the second signal also occupy a same frequency domain resource, because the first signal and the second signal are orthogonal to each other, the network device may also distinguish between the first signal and the second signal.

In the implementation 1, the reference sequence needs to be selected from a plurality of orthogonal sequences. When a generation manner of the second signal is the same as a generation manner of the first signal, a reference sequence used to generate the first signal needs to be orthogonal to a reference sequence used to generate the second signal, so that the first signal and the second signal are orthogonal. Different terminal devices may be configured to select different orthogonal sequences, so that signals sent by the terminal devices on a plurality of same time-frequency resource elements are orthogonal to each other.

Implementation 2:

In the implementation 2, the M sub-signals included in the first signal may be generated based on a reference sequence and an OCC. Specifically, the M sub-signals are generated by extending the reference sequence by using the OCC, where an $i^{th}$ sub-signal in the M sub-signals is generated by extending, by using the OCC, an $i^{th}$ sub-sequence obtained by intercepting the reference sequence.

For example, it is assumed that three terminal devices, that is, a terminal device 1, a terminal device 2, and a terminal device 3, all use a same reference sequence S(t). For example, M=5. The reference sequence S(t) may include five sub-sequences, that is, $S(t)=[X_1(t)\ X_2(t)\ X_3(t)\ X_4(t)\ X_5(t)]$.

It is assumed that an OCC selected by a terminal device 1 is $W_1$, an OCC selected by a terminal device 2 is $W_2$, and an OCC selected by a terminal device 3 is $W_3$. Specifically, the OCCs respectively meet the following forms:

$$W_1=[a_1(t)\ g_1(t)\ h_1(t)\ p_1(t)\ k_1(t)];$$

$$W_2=[a_2(t)\ g_2(t)\ h_2(t)\ p_2(t)\ k_2(t)];$$

and

$$W_3=[a_3(t)\ g_3(t)\ h_3(t)\ p_3(t)\ k_3(t)].$$

Herein, $W_1$, $W_2$, and $W_3$ are orthogonal to each other.

For example, $W_1$, $W_2$, and $W_3$ may be shown in Table 1.

**Table 1**

| | OCC |
|---|---|
| $W_1$ | $[\frac{j}{\sqrt{2}},\frac{j}{\sqrt{2}},1,1,1]$ |
| $W_2$ | $[\frac{j}{\sqrt{2}},\frac{j}{\sqrt{2}},1,1,-1]$ |
| $W_3$ | $[\frac{-j}{\sqrt{2}},\frac{-j}{\sqrt{2}},1,-1,-1]$ |

In Table 1, each OCC includes five elements.

$W_1$ is used as an example. In $W_1$, $a_1(t)=\frac{j}{\sqrt{2}}$; $g_1(t)=\frac{j}{\sqrt{2}}$; $h_1(t)=1$; $p_1(t)=1$; $k_1(t)=1$; and $j^2=-1$. Another case is not described again. Table 1 is merely an example. There may be other OCCs. Details are not described herein again.

With reference to the foregoing example, a sub-sequence corresponding to an $i^{th}$ sub-signal in the M sub-signals included in the first signal generated by the terminal device 1 is $S_i(t)=X_i(t)\otimes W_1(m)$, where $W_1(m)$ is an $m^{th}$ element in Wi. For example, $S_i(t)=X_i(t)\otimes a_1(t)$, $S_i(t)=X_i(t)\otimes g_1(t)$, $S_i(t)=X_i(t)\otimes h_1(t)$, $S_i(t)=X_i(t)\otimes p_1(t)$, or $S_i(t)=X_i(t)\otimes k_1(t)$. For another case, refer to the descriptions herein. Details are not described again.

The terminal device 1, the terminal device 2, and the terminal device 3 may send, on corresponding time-frequency resource elements, the first signals generated by the terminal device 1, the terminal device 2, and the terminal device 3. Specifically, in FIG. 6, five sub-signals included in a first signal generated by each of the terminal device 1, the terminal device 2, and the terminal device 3 may be sequentially transmitted through frequency hopping on time-frequency resource elements $R_{00}$, $R_{11}$, $R_{22}$, $R_{33}$, and $R_{44}$.

Optionally, in FIG. 6, different terminal devices may also send the first signal on different time-frequency resource elements. For example, the five sub-signals included in the first signal generated by the terminal device 1 may be transmitted through frequency hopping on time-frequency resource elements $R_{00}$, $R_{11}$, $R_{22}$, $R_{33}$, and $R_{44}$, and the five sub-signals included in the first signal generated by the terminal device 2 may be transmitted through frequency hopping on time-frequency resource elements $R_{40}$, $R_{01}$, $R_{12}$, $R_{23}$, and $R_{34}$.

It should be noted that, in this implementation, the reference sequence may be a sequence selected from a sequence set, or may be obtained in another manner. Reference sequences selected by different terminal devices may or may not be orthogonal to each other. This is not limited in this embodiment of this application. How the terminal device specifically determines a required OCC from a plurality of OCCs is not limited in this embodiment of this application. For example, the network device indicates the OCC by using signaling. In the M same time-frequency resource elements, the network device may configure different OCCs for different terminal devices.

In the implementation 2, when a generation manner of a second signal is the same as a generation manner of the first signal, a reference sequence used to generate the first signal and a reference sequence used to generate the second signal may not be orthogonal to each other. For example, the reference sequence used to generate the first signal may be the same as the reference sequence used to generate the second signal. In this case, an OCC used to generate the first signal and an OCC used to generate the second signal need to be orthogonal to each other, so that the first signal and the second signal are orthogonal. Different terminal devices may be configured to select different OCCs, so that signals sent by the terminal devices on a plurality of same time-frequency resource elements are orthogonal to each other.

In the foregoing embodiment, a length of the reference sequence used to generate the first signal corresponds to a high bandwidth. In this embodiment of this application, the first signal may be generated based on a reference sequence whose length corresponds to a low bandwidth. For details, refer to descriptions in Embodiment 2.

**Embodiment 2**

In Embodiment 2, the M sub-signals included in the first signal may be generated based on a reference sequence and an OCC. The OCC includes M elements, and the M elements are in a one-to-one correspondence with the M sub-signals. A bandwidth corresponding to a length of the reference sequence is less than or equal to a bandwidth of a time-frequency resource element; or a bandwidth corresponding to a length of the reference sequence is less than or equal to a bandwidth of any one of the M sub-signals.

It should be noted that different terminal devices may use reference sequences that are not mutually orthogonal. For example, two different terminal devices may use a same reference sequence.

In Embodiment 2, the M sub-signals correspond to a same reference sequence. Specifically, a sub-sequence corresponding to each of the M sub-signals is generated by extending the reference sequence by using the OCC.

For example, a bandwidth corresponding to the length of the reference sequence is 20 MHz, and a bandwidth corresponding to each sub-signal may be 20 MHz. For example, M=5. For a reference sequence $S(t)$, a sub-sequence $S_i(t)$ corresponding to a sub-signal sent in an $i^{th}$ time-frequency resource element is a sequence generated by extending the reference sequence by using an OCC $W_i$, where $S_i(t)=S(t)\otimes W_1(m)$, and $W_1(m)$ is an $m^{th}$ element in $W_1$.

It is assumed that two terminal devices, that is, a terminal device 1 and a terminal device 2, both use a same reference sequence $S(t)$. It is assumed that an OCC selected by the terminal device 1 is $W_1$, and an OCC selected by the terminal device 2 is $W_2$. Specifically, the OCCs respectively meet the following forms:

$$W_1=[a_1(t)\ g_1(t)\ h_1(t)\ p_1(t)\ k_1(t)];$$

and

$$W_2=[a_2(t)\ g_2(t)\ h_2(t)\ p_2(t)\ k_2(t)].$$

Herein, $W_1$ and $W_2$ are orthogonal to each other.

The terminal device 1 is used as an example. A sub-sequence corresponding to an $i^{th}$ sub-signal in the M sub-signals included in the first signal generated by the terminal device 1 is $S_i(t)=S(t)\otimes W_1(m)$, where $W_1(m)$ is an $m^{th}$ element in $W_1$. For example, $S_i(t)=S(t)\otimes a_1(t)$, $S_i(t)=S(t)\otimes g_1(t)$, $S_i(t)=S(t)\otimes h_1(t)$, $S_i(t)=S(t)\otimes p_1(t)$, or $S_i(t)=S(t)\otimes k_1(t)$. A sub-sequence corresponding to an $i^{th}$ sub-signal in the M sub-signals included in the first signal generated by the terminal device 2 is $S_i(t)=S(t)\otimes W_2(m)$, where $W_2(m)$ is an $m^{th}$ element in $W_2$. For example, $S_i(t)=S(t)\otimes a_2(t)$, $S_i(t)=S(t)\otimes g_2(t)$, $S_i(t)=S(t)\otimes h_2(t)$, $S_i(t)=S(t)\otimes p_2(t)$, or $S_i(t)=S(t)\otimes k_2(t)$.

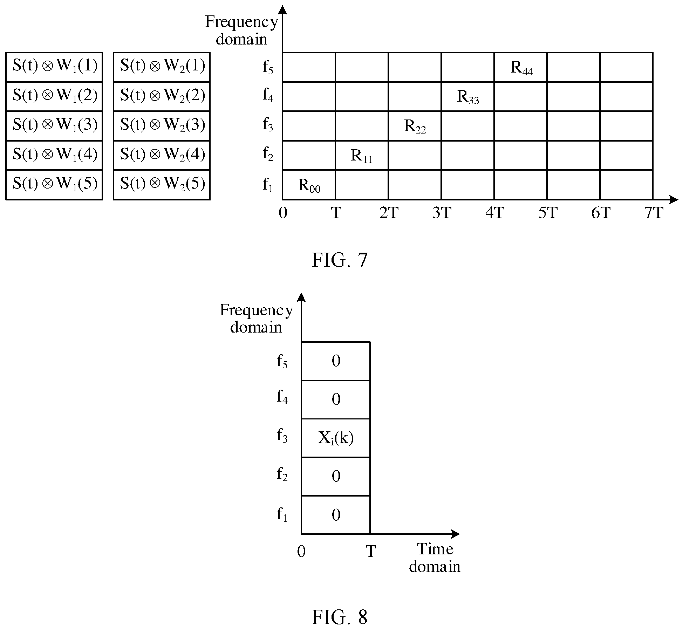

The terminal device 1 and the terminal device 2 may send, on corresponding time-frequency resource elements, the first signals generated by the terminal device 1 and the terminal device 2. Specifically, in FIG. 7, five sub-signals included in a first signal generated by each of the terminal device 1 and the terminal device 2 may be sequentially transmitted through frequency hopping on time-frequency resource elements $R_{00}$, $R_{11}$, $R_{22}$, $R_{33}$, and $R_{44}$.

In this embodiment, the OCC ensures that the first signals generated by the different terminal devices are orthogonal to each other, and can ensure that a receiving end restores signals from the different terminal devices.

With reference to the foregoing descriptions in Embodiment 1 and Embodiment 2, when receiving the M sub-signals in the M time-frequency resource elements, the network device may combine the M sub-signals distributed in different frequency ranges into one signal, that is, the first signal. In this case, the first signal may be considered as a sum of M sub-signals in a plurality of different frequency ranges in frequency domain, and a bandwidth of the first signal is a sum of bandwidths of the M sub-signals. Because the bandwidth of the first signal is high, when the location information of the terminal device is determined based on the first signal, the location information of the terminal device can be accurately determined. Details are described below. In the following description, an example in which a bandwidth of each time-frequency resource element is 20 MHz, and M=5, that is, the bandwidth of the first signal is 100 MHz is used for description. Other cases may be deduced by analogy. Details are not described again.

It is assumed that after an $i^{th}$ sub-signal sent by the terminal device in an $i^{th}$ time-frequency resource element is sampled in time domain, a time domain expression of an $n^{th}$ (n=1, ..., and a maximum quantity of symbols) sampling sample is as follows:

$$s_i(n) = \frac{1}{N}\sum_{k=0}^{N-1} X_i(k)e^{j2\pi k\frac{n}{N}}$$

Herein, N is a fast Fourier transform (fast Fourier transformation, FFT) size (size) corresponding to a narrowband. Assuming that a bandwidth of a time-frequency resource element is 20 MHz, $N = 1024$. $X_i(k)$ is discrete Fourier transform (discrete Fourier transform, DFT) of $s_i(n)$; and $\Delta f$ is a subcarrier spacing.

With reference to the foregoing description, when receiving the sub-signal $s_i(n)$ in the $i^{th}$ time-frequency resource element, the network device may transform $s_i(n)$ to a frequency domain, to obtain $X_i(k)$.

The network device combines the M sub-signals into one high-bandwidth signal, that is, the first signal, so that the location information of the terminal device can be accurately determined based on the first signal. Details are described below.

The network device adds zeros to $X_i(k)$ in frequency domain, that is, extends $X_i(k)$ to a broadband sequence (100 MHz). For example, in a sequence received from an $i^{th}$ time-frequency resource element (whose frequency is $f_i$), only an $f_i$ frequency domain part is reserved, and zeros are padded in other frequency domains. A schematic diagram of a frequency domain may be shown in FIG. 8.

$$\tilde{X}_i(k) = \begin{cases} X_i(k), & i \times (N-1) \le k < i \times N \\ 0, & others \end{cases}$$

Then, the network device transforms $X_i(k)$ to a time domain, to obtain the following:

$$\tilde{s}_i(n) = \frac{1}{\tilde{N}}\sum_{k=0}^{\tilde{N}-1} \tilde{X}_i(k)e^{j2\pi k\frac{n}{\tilde{N}}}$$

Herein, $\tilde{N}$ is an FFT size corresponding to a broadband, for example, an FFT size corresponding to 100 MHz, that is, $N = 4096$; $s_i(n)$ and $\tilde{s}_i(n)$ respectively correspond to time domain signals ($n^{th}$ samples) on a narrowband (20 MHz) and a large broadband (100 MHz); and $X_i(k)$ and $\tilde{X}_i(k)$ respectively correspond to frequency domain signals on a narrowband and a large broadband.

It should be noted that the network device needs to have a signal processing capability of 100 MHz and support a sampling rate of 100 MHz, to perform the foregoing process.

The network device superimposes, in time domain, five sub-signals received in five consecutive time-frequency resource elements, to restore a high-bandwidth signal (100 MHz). A frequency band of the high-bandwidth signal carries sequence information on five frequency sub-bands ($f_i = 20\ MHz,\ i = 1,2,\cdots,5$). For

details about a signal obtained after the five sub-signals are superimposed, refer to the following formula.

$$\sum_{i=1}^{5} \tilde{s}_i(n) = \frac{1}{\tilde{N}}\sum_{i=1}^{5}\sum_{k=1}^{\tilde{N}-1} \tilde{X}_i(k)e^{j2\pi k\frac{n}{\tilde{N}}}$$

The network device performs related measurement by using the restored high-bandwidth signal for positioning. Specifically, how to perform measurement and positioning is not limited in this embodiment of this application. For details, refer to descriptions in the existing document. The details are not described herein.

According to the method provided in embodiments of this application, it is ensured that high-bandwidth signals obtained after low-bandwidth signals sent by different terminal devices in a plurality of consecutive time-frequency resource elements are superimposed are still orthogonal to each other, so that the receiving end can successfully restore a large-broadband signal for positioning, to improve positioning precision.

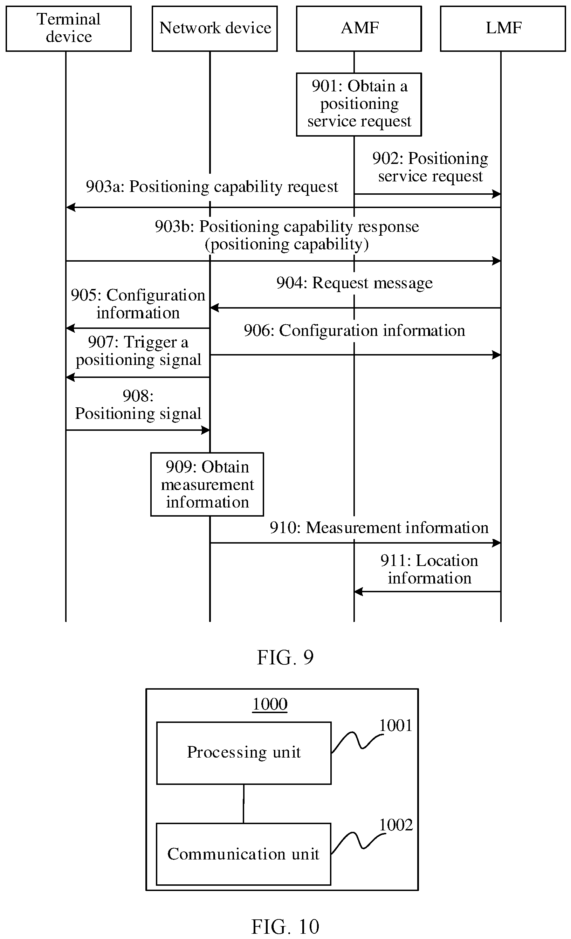

FIG. 9 is a schematic diagram of a positioning procedure to which an embodiment of this application is applicable. FIG. 9 lists only some steps in the positioning procedure. Detailed steps in the positioning procedure vary with different positioning scenarios and methods, and are not listed one by one herein.

Step 901: An AMF network element obtains a positioning service request, where the positioning service request is used to obtain information such as a positioning location of a terminal device.

The positioning service request may be sent by an LCS entity, or may be sent by the terminal device. This is not limited in this embodiment of this application.

Step 902: The AMF network element forwards the positioning service request to an LMF network element.

Step 903a: The LMF network element sends a positioning capability request message to the terminal device, where the positioning message is used to request a positioning capability of the terminal device.

For example, the positioning message may be sent by using an LTE positioning protocol (LTE positioning protocol, LPP) message.

Step 903b: The terminal device sends a positioning capability response message to the LMF network element, where the positioning capability response message includes the positioning capability of the terminal device.

The positioning capability refers to a positioning technology supported by the terminal device, for example, a capability of supporting global navigation satellite system (Global Navigation Satellite System, GNSS)-based positioning, a capability of supporting an observed time difference of arrival (Observed Time Difference of Arrival, OTDOA)-based positioning technology, and a capability of supporting sensor-based positioning.

Step 904: The LMF network element sends a request message to a network device, to request related information of a positioning signal, for example, configuration information of the positioning signal.

The positioning signal may be a signal sent by the terminal device on the M time-frequency resource elements in the foregoing embodiment, for example, a first signal. The first signal may also be a pos-SRS.

Step 905: The network device sends the configuration information of the positioning signal to the terminal device.

The configuration information may indicate one or more of the following:

locations, a quantity N, and the like of time-frequency resource elements occupied by the positioning signal;
a quantity of frequency hopping times in the N time-frequency resource elements, for example, the quantity of frequency hopping times may be equal to N;
a comb size (comb size);
a quantity that is of (code domain) orthogonalization dimensions and that can be achieved through cyclic shift; and
a reference sequence, or a parameter for generating a reference sequence.

The configuration information may further include other content. Details are not described herein.

Step 906: The network device sends the configuration information of the positioning signal to the LMF network element.

Optionally, step 907 is performed, that is, the network device triggers the terminal device to send the positioning signal.

Step 908: The terminal device sends the positioning signal.

The positioning signal may be the first signal described above. For details, refer to the descriptions in step 201 and step 202.

Step 909: The network device receives the positioning signal, and measures the positioning signal to obtain measurement information.

The measurement information may include but is not limited to a reference signal time difference (Reference Signal Time Difference, RSTD), a round trip time (Round Trip Time, RTT), reference signal received power (Reference Signal Received Power, RSRP), reference signal received quality (Reference Signal Received Quality, RSRQ), and the like.

Step 910: The network device sends the measurement information to the LMF network element.

Step 911: The LMF network element performs location calculation based on the measurement information, to obtain location information, and sends the location information to the AMF network element.

How the LMF network element specifically determines the location information based on the measurement information is not limited in this embodiment of this application.

The LMF network element may further send the location information to the terminal device, the network device, or the like.

The foregoing descriptions are merely an example. The positioning procedure may further include another step. Details are not described herein.

In the foregoing embodiments provided in this application, the methods provided in embodiments of this application are separately described from a perspective of interaction between devices. To implement functions in the method provided in the foregoing embodiments of this application, the network device or the terminal device may include a hardware structure and/or a software module, and implements the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, division into the modules is an example and is merely logical function division, and may be other division in an actual implementation. In addition, functional modules in embodiments of this application may be integrated into one processor, or may exist alone physically, or two or more modules may be integrated into one module. The integrated module may be implemented in a form of hardware, or may be implemented in a form of a software functional module.

Same as the foregoing concept, as shown in FIG. 10, an embodiment of this application further provides an apparatus 1000, configured to implement functions of network device or the terminal device in the foregoing methods. For example, the apparatus may be a software module or a chip system. In this embodiment of this application, the chip system may include a chip, or may include a chip and another discrete component. The apparatus 1000 may include a processing unit 1001 and a communication unit 1002.

In this embodiment of this application, the communication unit may also be referred to as a transceiver unit, and may include a sending unit and/or a receiving unit, which are respectively configured to perform sending and receiving steps of the network device or the terminal device in the foregoing method embodiments.

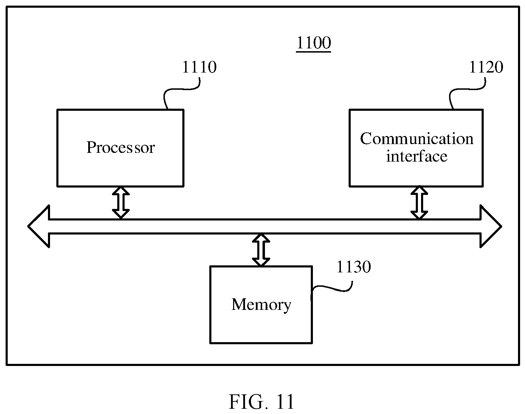

The following describes, in detail with reference to FIG. 10 and FIG. 11, communication apparatuses provided in embodiments of this application. It should be understood that descriptions of apparatus embodiments correspond to the descriptions of the method embodiments. Therefore, for content that is not described in detail, refer to the foregoing method embodiments. For brevity, details are not described herein again.

The communication unit may also be referred to as a transceiver, a transceiver machine, a transceiver apparatus, or the like. The processing unit may also be referred to as a processor, a processing board, a processing module, a processing apparatus, or the like. Optionally, a component that is in the communication unit 1002 and that is configured to implement the receiving function may be considered as a receiving unit, and a component that is in the communication unit 1002 and that is configured to implement the sending function may be considered as a sending unit. That is, the communication unit 1002 includes the receiving unit and the sending unit. The communication unit sometimes may also be referred to as a transceiver machine, a transceiver, a transceiver circuit, or the like. The receiving unit sometimes may also be referred to as a receiver, a receiver machine, a receiver circuit, or the like. The sending unit sometimes may also be referred to as a transmitter, a transmitter machine, a transmitter circuit, or the like.

When the communication apparatus 1000 performs the function of the terminal device in the procedure shown in FIG. 2 in the foregoing embodiment,

the processing unit is configured to generate a first signal based on a reference sequence and/or an orthogonal cover code OCC; and
the communication unit is configured to send the first signal on M time-frequency resource elements, where
the first signal includes M sub-signals, the M time-frequency resource elements are in a one-to-one correspondence with the M sub-signals, any two of the M time-frequency resource elements do not overlap in frequency domain or in time domain, and M is an integer greater than 1; and
the reference sequence is a sequence in a sequence set, and any two sequences in the sequence set are orthogonal to each other; and/or the OCC is an OCC in an OCC set, and any two OCCs in the OCC set are orthogonal to each other.

When the communication apparatus 1000 performs the function of the network device in the procedure shown in FIG. 2 in the foregoing embodiment,

the processing unit is configured to determine M time-frequency resource elements; and
the communication unit is configured to obtain a first signal on the M time-frequency resource elements, where
the first signal is generated based on a reference sequence and/or an orthogonal cover code OCC, the first signal includes M sub-signals, the M time-frequency resource elements are in a one-to-one correspondence with the M sub-signals, any two of the M time-frequency resource elements do not overlap in frequency domain or in time domain, and M is an integer greater than 1; and
the reference sequence is a sequence in a sequence set, and any two sequences in the sequence set are orthogonal to each other; and/or the OCC is an OCC in an OCC set, and any two OCCs in the OCC set are orthogonal to each other.

The foregoing descriptions are merely an example. The processing unit 1001 and the communication unit 1002 may further perform other functions. For more detailed descriptions, refer to related descriptions in the method embodiments shown in FIG. 2 to FIG. 9. Details are not described herein again.

FIG. 11 shows an apparatus 1100 according to an embodiment of this application. The apparatus shown in FIG. 11 may be an implementation of a hardware circuit of the apparatus shown in FIG. 10. The communication apparatus is applicable to the flowchart shown above, and performs functions of the terminal device or the network device in the foregoing method embodiments. For ease of description, FIG. 11 shows only main components of the communication apparatus.

As shown in FIG. 11, the communication apparatus 1100 includes a processor 1110 and a communication interface 1120. The processor 1110 and the communication interface 1120 are coupled to each other. It may be understood that the communication interface 1120 may be a transceiver or an input/output interface. Optionally, the communication apparatus 1100 may further include a memory 1130, configured to store instructions executed by the processor 1110, or input data required by the processor 1110 to run the instructions, or data generated after the processor 1110 runs the instructions.

When the communication apparatus 1100 is configured to implement the methods shown in FIG. 2 to FIG. 6, the processor 1110 is configured to implement a function of the processing unit 801, and the communication interface 1120 is configured to implement a function of the communication unit 802.

When the communication apparatus is a chip applied to a terminal device, the chip in the terminal device implements functions of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip applied to a network device, the chip in the network device implements functions of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a transistor logic device, a hardware component, or any combination thereof. The general-purpose processor may be a microprocessor, any conventional processor, or the like.

In embodiments of this application, the processor may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or a storage medium in any other form well-known in the art. For example, a storage medium is coupled to a processor, so that the processor can read information from the storage medium and write information into the storage medium. Certainly, the storage medium may be a component of the processor. The processor and the storage medium may be located in an ASIC. In addition, the ASIC may be located in a network device or a terminal device. Certainly, the processor and the storage medium may exist in the network device or the terminal device as discrete components.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, an optical memory, and the like) that include computer-usable program code.

This application is described with reference to the flowcharts and/or the block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specified function in one or more procedures in the flowcharts and/or in one or more blocks in the block diagrams.

The computer program instructions may alternatively be stored in a computer-readable memory that can guide a computer or another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

It is clear that, a person skilled in the art can make various modifications and variations to this application without departing from the scope of this application. In this way, this application is intended to cover these modifications and variations of this application provided that they fall within the scope of the claims of this application and their equivalent technologies.

## Claims

1. A signal sending method, comprising:

generating a first signal based on a reference sequence and/or an orthogonal cover code OCC; and
sending the first signal on M time-frequency resource elements, wherein
the first signal comprises M sub-signals, the M time-frequency resource elements are in a one-to-one correspondence with the M sub-signals, any two of the M time-frequency resource elements do not overlap in frequency domain or in time domain, and M is an integer greater than 1; and
the reference sequence is a sequence in a sequence set, and any two sequences in the sequence set are orthogonal to each other; and/or the OCC is an OCC in an OCC set, and any two OCCs in the OCC set are orthogonal to each other.

2. The method according to claim 1, wherein the generating a first signal based on a reference sequence comprises:

generating the M sub-signals based on the reference sequence, wherein
the reference sequence comprises M sub-sequences, and the M sub-signals are in a one-to-one correspondence with the M sub-sequences.

3. The method according to claim 2, wherein each of the M sub-sequences is intercepted from the reference sequence.

4. The method according to claim 1, wherein the generating a first signal based on a reference sequence and an OCC comprises:

   generating the M sub-signals based on the reference sequence and the OCC, wherein the OCC comprises M elements, and the M elements are in a one-to-one correspondence with the M sub-signals.

5. The method according to claim 4, wherein each of the M sub-signals corresponds to the reference sequence.

6. The method according to claim 4 or 5, wherein the M sub-signals are generated by extending the reference sequence by using the OCC.

7. The method according to claim 4 or 5, wherein the M sub-signals are generated by intercepting the reference sequence and extending, by using the OCC, a part obtained through interception.

8. The method according to any one of claims 1 to 7, wherein the first signal is orthogonal to a second signal carried on N time-frequency resource elements, and frequency domain resources of the M time-frequency resource elements completely or partially overlap frequency domain resources of the N time-frequency resource elements.

9. The method according to claim 8, wherein the second signal corresponds to a sequence other than the reference sequence in the sequence set; and/or the second signal corresponds to an OCC other than the OCC in the OCC set.

10. The method according to any one of claims 1 to 9, wherein the first signal is a positioning reference signal.

11. A signal receiving method, comprising:

    determining M time-frequency resource elements; and
    obtaining a first signal on the M time-frequency resource elements, wherein
    the first signal is generated based on a reference sequence and/or an orthogonal cover code OCC, the first signal comprises M sub-signals, the M time-frequency resource elements are in a one-to-one correspondence with the M sub-signals, any two of the M time-frequency resource elements do not overlap in frequency domain or in time domain, and M is an integer greater than 1; and
    the reference sequence is a sequence in a sequence set, and any two sequences in the sequence set are orthogonal to each other; and/or the OCC is an OCC in an OCC set, and any two OCCs in the OCC set are orthogonal to each other.

12. The method according to claim 11, wherein the M sub-signals in the first signal are generated based on the reference sequence, the reference sequence comprises M sub-sequences, and the M sub-signals are in a one-to-one correspondence with the M sub-sequences.

13. The method according to claim 12, wherein each of the M sub-sequences is intercepted from the reference sequence.

14. The method according to claim 11, wherein the M sub-signals in the first signal are generated based on the reference sequence and the OCC, the OCC comprises M elements, and the M elements are in a one-to-one correspondence with the M sub-signals.

15. The method according to claim 14, wherein each of the M sub-signals corresponds to the reference sequence.

16. The method according to claim 14 or 15, wherein the M sub-signals are generated by extending the reference sequence by using the OCC.

17. The method according to claim 14 or 15, wherein the M sub-signals are generated by intercepting the reference sequence and extending, by using the OCC, a part obtained through interception.

18. The method according to any one of claims 11 to 17, wherein the first signal is orthogonal to a second signal carried on N time-frequency resource elements, and frequency domain resources of the M time-frequency resource elements completely or partially overlap frequency domain resources of the N time-frequency resource elements.

19. The method according to claim 18, wherein the second signal corresponds to a sequence other than the reference sequence in the sequence set; and/or the second signal corresponds to an OCC other than the OCC in the OCC set.

20. The method according to any one of claims 11 to 19, wherein the first signal is a positioning reference signal.

21. A communication apparatus, comprising:

a processing unit, configured to generate a first signal based on a reference sequence and/or an orthogonal cover code OCC; and
a communication unit, configured to send the first signal on M time-frequency resource elements, wherein
the first signal comprises M sub-signals, the M time-frequency resource elements are in a one-to-one correspondence with the M sub-signals, any two of the M time-frequency resource elements do not overlap in frequency domain or in time domain, and M is an integer greater than 1; and
the reference sequence is a sequence in a sequence set, and any two sequences in the sequence set are orthogonal to each other; and/or the OCC is an OCC in an OCC set, and any two OCCs in the OCC set are orthogonal to each other.

22. The apparatus according to claim 21, wherein the processing unit is specifically configured to:

generate the M sub-signals based on the reference sequence, wherein
the reference sequence comprises M sub-sequences, and the M sub-signals are in a one-to-one correspondence with the M sub-sequences.

23. The apparatus according to claim 22, wherein each of the M sub-sequences is intercepted from the reference sequence.

24. The apparatus according to claim 21, wherein the processing unit is specifically configured to:

generate the M sub-signals based on the reference sequence and the OCC, wherein
the OCC comprises M elements, and the M elements are in a one-to-one correspondence with the M sub-signals.

25. The apparatus according to claim 24, wherein each of the M sub-signals corresponds to the reference sequence.

26. The apparatus according to claim 24 or 25, wherein the M sub-signals are generated by extending the reference sequence by using the OCC.

27. The apparatus according to claim 24 or 25, wherein the M sub-signals are generated by intercepting the reference sequence and extending, by using the OCC, a part obtained through interception.

28. The apparatus according to any one of claims 21 to 27, wherein the first signal is orthogonal to a second signal carried on N time-frequency resource elements, and frequency domain resources of the M time-frequency resource elements completely or partially overlap frequency domain resources of the N time-frequency resource elements.

29. The apparatus according to claim 28, wherein the second signal corresponds to a sequence other than the reference sequence in the sequence set; and/or the second signal corresponds to an OCC other than the OCC in the OCC set.

30. The apparatus according to any one of claims 21 to 29, wherein the first signal is a positioning reference signal.

31. A communication apparatus, comprising:

a processing unit, configured to determine M time-frequency resource elements; and
a communication unit, configured to obtain a first signal on the M time-frequency resource elements, wherein
the first signal is generated based on a reference sequence and/or an orthogonal cover code OCC, the first signal comprises M sub-signals, the M time-frequency resource elements are in a one-to-one correspondence with the M sub-signals, any two of the M time-frequency resource elements do not overlap in frequency domain or in time domain, and M is an integer greater than 1; and
the reference sequence is a sequence in a sequence set, and any two sequences in the sequence set are orthogonal to each other; and/or the OCC is an OCC in an OCC set, and any two OCCs in the OCC set are orthogonal to each other.

32. The apparatus according to claim 31, wherein the M sub-signals in the first signal are generated based on the reference sequence, the reference sequence comprises M sub-sequences, and the M sub-signals are in a one-to-one correspondence with the M sub-sequences.

33. The apparatus according to claim 32, wherein each of the M sub-sequences is intercepted from the reference sequence.

34. The apparatus according to claim 31, wherein the M sub-signals in the first signal are generated based on the reference sequence and the OCC, the OCC comprises M elements, and the M elements are in a one-to-one correspondence with the M sub-signals.

35. The apparatus according to claim 34, wherein each of the M sub-signals corresponds to the reference sequence.

36. The apparatus according to claim 34 or 35, wherein the M sub-signals are generated by extending the reference sequence by using the OCC.

37. The apparatus according to claim 34 or 35, wherein the M sub-signals are generated by intercepting the reference sequence and extending, by using the OCC, a part obtained through interception.

38. The apparatus according to any one of claims 31 to 37, wherein the first signal is orthogonal to a second signal carried on N time-frequency resource elements, and frequency domain resources of the M time-frequency resource elements completely or partially overlap frequency domain resources of the N time-frequency resource elements.

39. The apparatus according to claim 38, wherein the second signal corresponds to a sequence other than the reference sequence in the sequence set; and/or the second signal corresponds to an OCC other than the OCC in the OCC set.

40. The apparatus according to any one of claims 31 to 39, wherein the first signal is a positioning reference signal.

41. A chip, comprising a processor, wherein the processor is coupled to a memory, and is configured to execute a computer program or instructions stored in the memory, and when the processor executes the computer program or the instructions, the processor is enabled to perform the method according to any one of claims 1 to 20.

42. A computer-readable storage medium, comprising instructions, wherein when the instructions are run on a computer, the computer is enabled to perform the method according to any one of claims 1 to 20.

43. A computer program product, comprising computer-readable instructions, wherein when a computer reads and executes the computer-readable instructions, the computer is enabled to perform the method according to any one of claims 1 to 20.

LMF

E-SMLC

SLP

Terminal device

gNB

AMF

FIG. 1

Network device

Terminal device

201: The terminal device generates a first signal based on at least one of a reference sequence and an orthogonal cover code

202: The terminal device sends the first signal on M time-frequency resource elements

First signal

203: The network device determines the M time-frequency resource elements

204: The network device obtains the first signal by using the M time-frequency resource elements

FIG. 2

FIG. 3(a)

FIG. 3(b)

FIG. 4

S(t)

| S$_5$(t) |
| S$_4$(t) |
| S$_3$(t) |
| S$_2$(t) |
| S$_1$(t) |

Frequency domain

| | 0 | T | 2T | 3T | 4T | 5T | 6T | 7T |
|---|---|---|---|---|---|---|---|---|
| f$_5$ | R$_{40}$ | | | | R$_{44}$ | | | |
| f$_4$ | | | | R$_{33}$ | R$_{34}$ | | | |
| f$_3$ | | | R$_{22}$ | R$_{23}$ | | | | |
| f$_2$ | | R$_{11}$ | R$_{12}$ | | | | | |
| f$_1$ | R$_{00}$ | R$_{01}$ | | | | | | |

Time domain

FIG. 5(a)

S(t)

| S$_1$(t) | S$_2$(t) | S$_3$(t) | S$_4$(t) | S$_5$(t) |
|---|---|---|---|---|
| 0 | L1 | L2 | L3 | L4 | L |

Time domain

FIG. 5(b)

S(t) ⊗ W$_1$  S(t) ⊗ W$_2$  S(t) ⊗ W$_3$

Frequency domain

| | 0 | T | 2T | 3T | 4T | 5T | 6T | 7T |
|---|---|---|---|---|---|---|---|---|
| f$_5$ | | | | | R$_{44}$ | | | |
| f$_4$ | | | | R$_{33}$ | | | | |
| f$_3$ | | | R$_{22}$ | | | | | |
| f$_2$ | | R$_{11}$ | | | | | | |
| f$_1$ | R$_{00}$ | | | | | | | |

FIG. 6

| | | | | | | | | |
|---|---|---|---|---|---|---|---|---|
| $S(t) \otimes W_1(1)$ | $S(t) \otimes W_2(1)$ |
| $S(t) \otimes W_1(2)$ | $S(t) \otimes W_2(2)$ |
| $S(t) \otimes W_1(3)$ | $S(t) \otimes W_2(3)$ |
| $S(t) \otimes W_1(4)$ | $S(t) \otimes W_2(4)$ |
| $S(t) \otimes W_1(5)$ | $S(t) \otimes W_2(5)$ |

Frequency domain

| | 0 | T | 2T | 3T | 4T | 5T | 6T | 7T |
|---|---|---|---|---|---|---|---|---|
| $f_5$ | | | | | $R_{44}$ | | | |
| $f_4$ | | | | $R_{33}$ | | | | |
| $f_3$ | | | $R_{22}$ | | | | | |
| $f_2$ | | $R_{11}$ | | | | | | |
| $f_1$ | $R_{00}$ | | | | | | | |

FIG. 7

Frequency domain

| | 0 — T |
|---|---|
| $f_5$ | 0 |
| $f_4$ | 0 |
| $f_3$ | $X_i(k)$ |
| $f_2$ | 0 |
| $f_1$ | 0 |

Time domain

FIG. 8

| Terminal device | Network device | AMF | LMF |
|---|---|---|---|

901: Obtain a positioning service request

902: Positioning service request

903a: Positioning capability request

903b: Positioning capability response (positioning capability)

904: Request message

905: Configuration information

906: Configuration information

907: Trigger a positioning signal

908: Positioning signal

909: Obtain measurement information

910: Measurement information

911: Location information

FIG. 9

<u>1000</u>

Processing unit — 1001

Communication unit — 1002

FIG. 10

FIG. 11

## INTERNATIONAL SEARCH REPORT

International application No.

**PCT/CN2020/128220**

### A. CLASSIFICATION OF SUBJECT MATTER

H04L 5/00(2006.01)i; H04W 72/04(2009.01)i

According to International Patent Classification (IPC) or to both national classification and IPC

### B. FIELDS SEARCHED

Minimum documentation searched (classification system followed by classification symbols)

H04L; H04W; H04B

Documentation searched other than minimum documentation to the extent that such documents are included in the fields searched

Electronic data base consulted during the international search (name of data base and, where practicable, search terms used)

CNKI; CNPAT; WPI; EPODOC; 3GPP; IEEE: 新无线, NR, 带宽, 较高, 较窄, 较低, 利用率, 探测参考信号, 定位, SRS, 正交, 相互, 互相, 正交掩码, 正交覆盖码, OCC, 不同终端, new radio, sounding reference signal, bandwidth, positioning, location, precision, terminal, orthogonal cover code

### C. DOCUMENTS CONSIDERED TO BE RELEVANT

| Category* | Citation of document, with indication, where appropriate, of the relevant passages | Relevant to claim No. |
|---|---|---|
| Y | CN 111756501 A (HUAWEI TECHNOLOGIES CO., LTD.) 09 October 2020 (2020-10-09) description paragraphs [0006]-[0113] | 1-43 |
| Y | CN 108631976 A (HUAWEI TECHNOLOGIES CO., LTD.) 09 October 2018 (2018-10-09) description paragraphs [0006]-[0113] | 1-43 |
| A | CN 111385882 A (LONGBO COMMUNICATION TECHNICAL CO., LTD.) 07 July 2020 (2020-07-07) entire document | 1-43 |
| A | CN 111865517 A (HUAWEI TECHNOLOGIES CO., LTD.) 30 October 2020 (2020-10-30) entire document | 1-43 |
| A | CN 108289021 A (HUAWEI TECHNOLOGIES CO., LTD.) 17 July 2018 (2018-07-17) entire document | 1-43 |
| A | CN 109964436 A (CONVIDA WIRELESS, L.L.C.) 02 July 2019 (2019-07-02) entire document | 1-43 |
| A | CN 109478980 A (TELEFONAKTIEBOLAGET LM ERICSSON (PUBL)) 15 March 2019 (2019-03-15) entire document | 1-43 |

☐ Further documents are listed in the continuation of Box C.   ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 August 2021** | **10 August 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2020/128220**

| Patent document cited in search report | | | Publication date (day/month/year) | Patent family member(s) | | | Publication date (day/month/year) |
|---|---|---|---|---|---|---|---|
| CN | 111756501 | A | 09 October 2020 | WO | 2020200035 | A1 | 08 October 2020 |
| CN | 108631976 | A | 09 October 2018 | US | 2020022127 | A1 | 16 January 2020 |
| | | | | WO | 2018171754 | A1 | 27 September 2018 |
| | | | | CN | 110447288 | A | 12 November 2019 |
| | | | | EP | 3592069 | A1 | 08 January 2020 |
| CN | 111385882 | A | 07 July 2020 | WO | 2020134910 | A1 | 02 July 2020 |
| CN | 111865517 | A | 30 October 2020 | WO | 2020216068 | A1 | 29 October 2020 |
| CN | 108289021 | A | 17 July 2018 | US | 2019342052 | A1 | 07 November 2019 |
| | | | | EP | 3554165 | A1 | 16 October 2019 |
| | | | | KR | 20190098237 | A | 21 August 2019 |
| CN | 109964436 | A | 02 July 2019 | US | 2019123864 | A1 | 25 April 2019 |
| | | | | US | 2020412498 | A1 | 31 December 2020 |
| | | | | JP | 2021036710 | A | 04 March 2021 |
| | | | | KR | 20180135480 | A | 20 December 2018 |
| | | | | JP | 2019518364 | A | 27 June 2019 |
| | | | | EP | 3446432 | A1 | 27 February 2019 |
| | | | | WO | 2017184865 | A1 | 26 October 2017 |
| CN | 109478980 | A | 15 March 2019 | US | 2019246427 | A1 | 08 August 2019 |
| | | | | WO | 2018015918 | A1 | 25 January 2018 |
| | | | | EP | 3758270 | A1 | 30 December 2020 |
| | | | | PL | 3488552 | T3 | 25 January 2021 |
| | | | | EP | 3488552 | A1 | 29 May 2019 |

Form PCT/ISA/210 (patent family annex) (January 2015)